# FASCICULE DE BREVET EUROPEEN

(11) **EP 0 572 320 B1**
(45) Date de publication et mention de la délivrance du brevet: **21.01.1998**
(21) Numéro de dépôt: 93401347.5
(22) Date de dépôt: 26.05.1993
(51) Int. Cl.: B32B 27/30

(54) **Ruban en polytétrafluoroéthylène apte au marquage par laser**
Laser-markierbares Band aus Polytetrafluoroäthylen
Laser-markable polytetrafluorethylene tape

(30) Priorité: 26.05.1992 FR 9206427
(43) Date de publication de la demande: 01.12.1993
(73) Titulaire: COMPAGNIE PLASTIC OMNIUM, 69007 Lyon (FR)
(72) Inventeur: Yeung, Chor Keung, F-52200 Langres (FR)
(74) Mandataire: Leszczynski, André

(56) Documents cités:
- EP-A- 0 321 091
- EP-A- 0 436 221
- US-A- 4 547 424
- US-A- 4 652 528
- WORLD PATENTS INDEX LATEST Accession No. 92-044912 Week 06 Derwent Publications Ltd., London GB & JP-A-3288624 (SUMITOMO ELEC.) 18-12-91

## Description

La présente invention est relative à un ruban en polytétrafluoroéthylène (PTFE) formé d'au moins deux couches de polytétafluoroéthylène de couleurs différentes, apte au marquage au laser.

On rappelle que le marquage par laser consiste à réaliser des inscriptions sur le ruban par irradiation du ruban à l'aide d'un faisceau laser, notamment un laser au CO₂. En réglant de manière appropriée l'intensité du faisceau laser, on réalise des perforations dans la couche supérieure du ruban en laissant apparaître dans les zones perforées la couleur de la couche sous-jacente en formant ainsi le marquage désiré.

On connaît des rubans multi-couches en PTFE aptes au marquage par laser et utilisés principalement pour le guipage de câbles électriques.

Le ruban assure dans ce cas une fonction d'isolation comme les rubans de PTFE traditionnels et est apte à recevoir, par marquage par laser, des inscriptions d'identification du câble.

Les rubans connus, aptes au marquage par laser, comportent habituellement une pluralité de couches très minces de PTFE cuit entre lesquelles sont disposées des couches d'une autre résine fluorée telle que le FEP et/ou le PFA, le ruban lui-même étant enduit de FEP et/ou de PFA.

La présence de ces autres résines fluorées est nécessaire pour permettre une adhésion satisfaisante des couches de ruban entre elles et du ruban sur le support sur lequel il est enroulé, notamment un câble électrique.

La fabrication d'une tel ruban comportant un grand nombre de couches nécessite la mise en oeuvre d'un procédé par voie humide complexe et coûteux, consistant à déposer des couches successives de résines fluorées en dispersion, le procédé faisant intervenir des étapes de séchage et de cuisson à des températures supérieures à la température de gélification du PTFE.

Le produit obtenu est donc particulièrement coûteux.

De plus, l'on constate, lors du marquage par un faisceau laser, la formation de bulles et de boursouflures dans le ruban, dues à une retenue, dans les couches du ruban, des produits gazeux de la réaction induite par l'irradiation.

On a proposé dans le brevet américain US-A-4 652 528 un ruban comportant une couche de PTFE et une couche de résine fluorée PFA réunies par laminage à haute température.

Ce ruban est destiné au marquage par laser de pièces automobiles en vue de leur identification lors de l'assemblage sur les véhicules.

La présente invention se propose de réaliser un ruban en PTFE évitant les inconvénients précités, pouvant être fabriqué de manière particulièrement simple et économique, convenant au guipage de câbles électriques devant être marqués par laser.

Le ruban selon la présente invention, apte au marquage laser est formé d'au moins deux couches de PTFE de couleurs différentes dont la couche inférieure au moins est constituée de PTFE cru, et dont la couche supérieure au moins présente une densité inférieure à 1,0.

Par PTFE cru on entend du PTFE qui n'a jamais été soumis par cuisson à une température dite de "gélification" ou "frittage" qui est de l'ordre de 350°C.

Dans un mode de réalisation préféré de l'invention, le ruban comprend seulement deux couches de PTFE, à savoir une couche supérieure de faible densité, inférieure à 1,0, d'une première couleur, par exemple blanche en PTFE naturel, cru ou cuit, éventuellement additionné de pigments blancs, et une couche inférieure d'une seconde couleur réalisée en PTFE cru chargé de pigments colorés, par exemple de pigments noirs.

Dans un autre mode de réalisation de l'invention, le ruban comporte trois couches de PTFE, à savoir une couche supérieure d'une première couleur, par exemple blanche en PTFE cuit naturel, éventuellement additionné de pigments blancs, une couche intermédiaire réalisée en PTFE cuit chargé de pigments d'une seconde couleur, par exemple de pigments noirs, et une couche inférieure réalisée en PTFE cru chargé de pigments d'une troisième couleur, différente de la seconde, notamment de pigments rouges, la couche supérieure et la couche intermédiaire présentant une densité faible inférieure à 1,0.

Un réglage de l'intensité du faisceau laser permet de percer sélectivement, soit uniquement la couche supérieure blanche, soit également la couche intermédiaire, ce qui permet le marquage en deux couleurs différentes correspondant respectivement à la couleur de la couche intermédiaire et de la couche inférieure.

Chacune des couches de PTFE du ruban selon l'invention peut être réalisée par le procédé connu d'extrusion lubrifiée qui permet d'obtenir un ruban présentant des caractéristiques parfaitement contrôlées, contrairement à des procédés par voie humide, tels que ceux mis en oeuvre pour obtenir les rubans aptes au marquage par laser connus.

On rappelle que le procédé d'extrusion lubrifiée consiste à mélanger de la poudre de PTFE avec un lubrifiant pour réaliser une préforme compacte qui est soumise à un filage à la presse dans laquelle un piston refoule le PTFE à travers une filière de manière à former un profilé tel qu'un ruban plat ou un jonc cylindrique.

Ce profilé est ensuite soumis à une opération de calandrage entre deux cylindres pour obtenir un ruban de faible épaisseur.

Le lubrifiant est ensuite éliminé, notamment par séchage, ou le cas échéant à l'aide d'un solvant.

Si on le souhaite, le ruban ainsi obtenu peut être soumis à une étape de dédensification par étirage, par exemple en faisant passer le ruban successivement sur des rouleaux entraînés à des vitesses périphériques linéaires qui sont dans le rapport de l'allongement que l'on désire donner au ruban, ou encore en soumettant le ruban à l'action d'un dispositif de tension qui exerce sur le ruban un effort correspondant à la déformation que l'on désire lui communiquer.

Le cas échéant l'étirage du ruban peut s'effectuer après un chauffage de celui-ci.

Dans un premier mode de réalisation de ruban selon l'invention, on met en oeuvre le procédé d'extrusion lubrifiée suivi d'un calandrage et le cas échéant d'un étirage de dédensification séparément sur des préformes cylindriques ou prismatiques constituées l'une de PTFE cru naturel, éventuellement chargé de pigments blancs, la ou les autres préformes étant constituées de PTFE cru, chargé de pigments colorés.

On obtient ainsi séparément, sous forme de rubans, les différentes couches destinées à constituer le ruban selon l'invention. Les couches destinées à former la couche supérieure du ruban ainsi que la ou les couches intermédiaires peuvent être cuites ensuite en étant soumises pendant un temps suffisant à une température supérieure à la température de frittage.

Ces différentes couches ainsi formées peuvent être associées avec ou sans liant.

En variante, on peut appliquer une couche terminée obtenue par le procédé d'extrusion lubrifiée décrit ci-dessus sur une couche sortant des cylindres de calandrage et de laquelle le lubrifiant n'a pas encore été éliminé.

Au cours du séchage suivant le calandrage, une partie du lubrifiant s'évaporant de la couche qui le contient encore reste entre les deux couches de ruban et réalise une liaison intime d'adhésion entre les couches.

Dans une autre variante, les couches extrudées séparément sont calandrées ensembles, le ruban formé étant ensuite séché pour éliminer le lubrifiant et le cas échéant soumis à une étape de dédensification.

Dans un autre mode de réalisation du ruban selon l'invention, on met en oeuvre le procédé d'extrusion lubrifiée suivi d'un calandrage et le cas échéant d'un étirage de dédensification sur une préforme composite, notamment cylindrique ou prismatique, présentant des zones longitudinales constituées d'un mélange de PTFE cru et de lubrifiant, l'une des zones contenant du PTFE naturel, le cas échéant chargé de pigments blancs ou colorés et la ou les autres zones contenant du PTFE chargé de pigments colorés de couleurs différentes.

Ainsi, par exemple, pour réaliser un ruban à deux couches, la préforme peut comporter deux zones hémicylindriques contenant, en mélange avec un lubrifiant, l'une du PTFE cru naturel, éventuellement chargé en pigments blancs ou colorés, l'autre du PTFE cru chargé de pigments colorés de couleurs différentes.

Pour réaliser une telle préforme on met en place dans un moule de préforme cylindrique, un mandrin hémicylindrique, on remplit l'espace restant du moule d'un premier mélange de lubrifiant et de PTFE naturel chargé le cas échéant de pigments blancs ou colorés, on refoule à l'aide d'un piston ce mélange, après quoi, on retire le mandrin et on met en place dans la partie libre du moule un autre mélange de lubrifiant et de PTFE contenant des pigments colorés de couleurs différentes, par exemple des pigments noirs et on effectue par refoulement à l'aide du piston un compactage des deux mélanges différents contenus dans le moule.

Pour réaliser des préformes comportant plus de deux mélanges, pour réaliser des rubans à plus de deux couches, on effectue les opérations précitées successivement en prévoyant un ou le cas échéant plusieurs mandrins de sections appropriées.

Outre les pigments colorés, des couches de PTFE cru du ruban selon l'invention peuvent comporter d'autres additifs destinés à conférer au ruban des propriétés particulières, par exemple du noir de carbone si l'on désire conférer au ruban une fonction supplémentaire anti-statique.

D'autres avantages et caractéristiques de l'invention apparaîtront à la lecture de la description suivante donnée en référence au dessin annexé dans lequel :
- les figures 1a et 1b illustrent les différentes étapes de mise en oeuvre du procédé d'extrusion lubrifiée pour obtenir une couche du ruban selon l'invention à partir d'une préforme,
- la figure 2 illustre une préforme pour la réalisation par coextruction lubrifiée d'un ruban à deux couches, et
- les figures 3a à 3d illustrent les étapes de réalisation de la préforme de la figure 2.

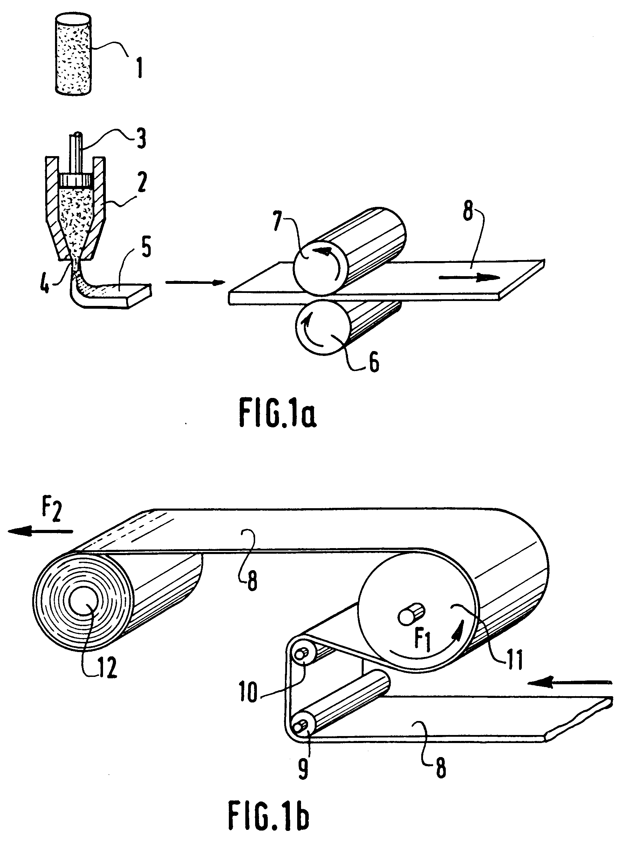

On se réfère tout d'abord aux figures 1a et 1b.

La figure 1a illustre les phases d'extrusion lubrifiée et de calandrage pour la réalisation d'une couche de ruban de PTFE cru, tandis que la figure 1b illustre la phase, éventuellement mise en oeuvre, de dédensification par étirage.

Une préforme, par exemple de forme cylindrique, est obtenue par compactage d'un mélange de PTFE cru en poudre fine et de lubrifiant.

La préforme 1 est introduite dans une presse de filage 2 où un piston 3 refoule le mélange de poudre de PTFE cru et de lubrifiant à travers une filière 4 qui, dans l'exemple illustré, est en forme de fente, de manière à obtenir un ruban plat 5. En variante, la filière pourrait être circulaire de manière à obtenir un jonc cylindrique.

Ce ruban 5 est ensuite amené à passer entre deux cylindres de calandrage 6 et 7 tournant en sens opposé de manière à obtenir un ruban mince 8.

Dans une étape ultérieure, non illustrée, le ruban 8 est séché pour éliminer le lubrifiant qui a servi à favoriser l'extrusion et le calandrage. En fonction du lubrifiant utilisé, l'étape de séchage peut être remplacée par un passage du ruban dans un solvant pour éliminer le lubrifiant.

Si la densité du ruban 8 ainsi obtenu est encore supérieure à la valeur désirée, on procède à une phase d'étirage illustrée à la figure 1b.

Le ruban 8 est amené, par l'intermédiaire de rouleaux de renvoi 9, 10, sur un tambour 11 qui est entraîné en rotation à vitesse constante autour de son axe dans le sens de la flèche F1.

Si nécessaire, le tambour 11 comporte un dispositif de chauffage interne permettant de maintenir sa périphérie à une température constante réglable.

Après s'être enroulé sur la périphérie du tambour 11, le ruban de PTFE cru 8 peut être enroulé sur un noyau 12 associé à un dispositif d'entraînement non représenté, agencé pour que l'effort de traction 2 exercé sur le ruban puisse être réglé à volonté.

En variante, on peut prévoir en aval du tambour 11, un autre tambour entraîné à une vitesse périphérique supérieure à la vitesse périphérique du tambour 11 de manière à provoquer l'allongement du ruban dès qu'il sort du tambour.

Le procédé illustré aux figures 1a et 1b est mis en oeuvre séparément pour réaliser chacune des couches devant constituer le ruban selon l'invention. Le ruban destiné à former la couche supérieure peut être ensuite soumis à une cuisson.

L'association des différentes couches fabriquées séparément peut s'effectuer selon l'un des modes de mise en oeuvre exposés précédemment.

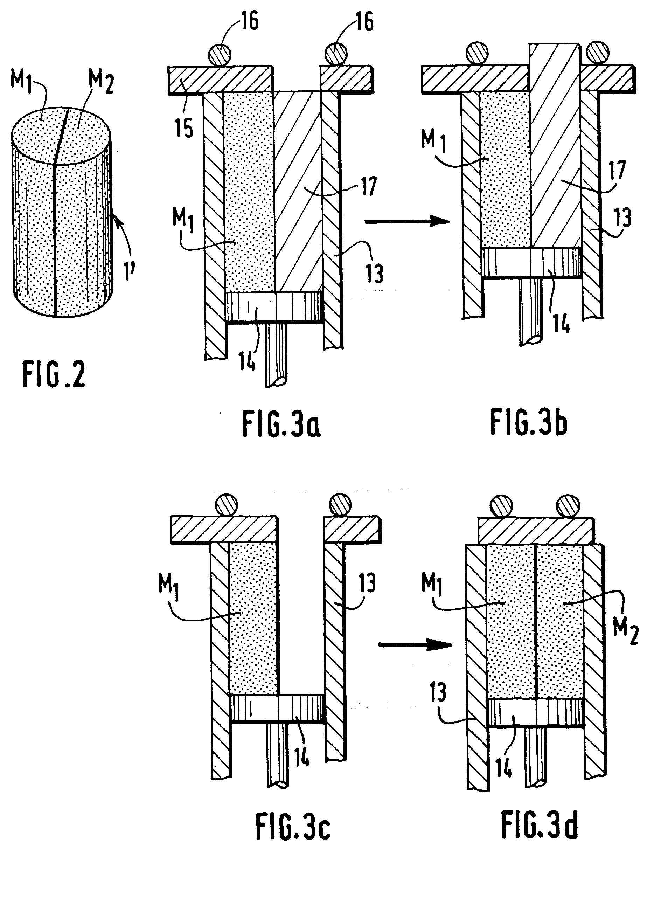

En variante, on peut réaliser directement le ruban selon l'invention par coextrusion lubrifiée. Par exemple, pour réaliser un ruban à deux couches, on utilise, à la place de la préforme 1 illustrée à la figure 1a, une préforme 1' illustrée à la figure 2 et formée de deux mélanges M1 et M2 différents. Le mélange M1 est constitué de poudre fine de PTFE cru naturel, le cas échéant additionné de pigments blancs, et d'un lubrifiant, et la couche M2 est un mélange d'une poudre fine de PTFE cru additionné de pigments colorés, par exemple de pigments noirs, et d'un lubrifiant.

La préparation d'une telle préforme est illustrée aux figures 3a à 3d.

On utilise un moule cylindrique 13 dans lequel coulisse un piston 14.

La partie supérieure du moule est sélectivement obturable par un couvercle 15 maintenu fermement sur le moule 13 par des organes d'appui 16. On met en place dans le moule un mandrin de forme hémicylindrique 17 et l'on remplit le reste de la cavité du moule d'un premier mélange M1 et on obture à l'aide du couvercle 15 la partie supérieure du moule à l'aplomb de la zone contenant ce mélange M1.

On actionne le piston 14 de manière à refouler le mélange M1 après quoi l'on retire le mandrin 17 et l'on remplit l'espace hémicylindrique libre du moule d'un second mélange M2. Après avoir obturé complètement l'extrémité supérieure du moule, on actionne à nouveau le piston 14 de manière à provoquer le compactage des mélanges M1 et M2. Après avoir retiré le couvercle d'obturation, on obtient la préforme 1' illustrée sur la figure 2 qui comporte deux zones longitudinales hémicylindriques contenant respectivement les mélanges M1 et M2. En utilisant plusieurs mandrins on peut réaliser des préformes formées de trois mélanges ou plus permettant de réaliser un ruban formé de trois couches ou plus.

On va décrire ci-après deux exemples de rubans aptes au marquage par laser selon l'invention.

### Exemple 1

Par le procédé illustré aux figures 1a et 1b on fabrique la couche supérieure du ruban en PTFE naturel, la couche obtenue présentant une épaisseur de 35 µm et une densité de 0,75.

En mettant en oeuvre le procédé illustré à la figure 1a, on réalise la couche inférieure du ruban en utilisant du PTFE cru chargé à raison de 1% en poids de pigments noirs. On ne procède pas à l'étape de dédensification illustrée à la figure 1b.

La couche inférieure présente une épaisseur de 50 µm et une densité de 1,60.

Les deux couches sont associées par pression.

Le ruban bicouche obtenu a été utilisé dans la préparation d'un câble guipé, la couche blanche dédensifiée étant disposée à l'extérieur.

Après cuisson in situ du ruban, on constate que la couche extérieure du ruban présente une bonne opacité, le câble paraissant blanc.

On a pu réaliser de façon satisfaisante, sans bulles ni boursouflures, des impressions en utilisant un laser au CO₂ conventionnel avec une densité d'énergie comprise entre 8 et 15 J/cm².

### Exemple 2

On a réalisé un ruban par coextrusion en réalisant tout d'abord une préforme telle qu'illustrée à la figure 2 en utilisant un mélange M1 de PTFE cru et de lubrifiant contenant 2% en poids de pigments blancs et un mélange M2 de PTFE cru et de lubrifiant contenant 2% en poids de pigments noirs.

Après coextrusion lubrifiée, calandrage et séchage, on a obtenu un ruban bicouche d'une épaisseur de 75 µm.

La couche supérieure pigmentée en blanc présente une épaisseur de 25 µm.

On a dédensifié ce ruban par étirage de manière à ramener sa densité de 1,58 à 0,80.

On a également constaté une très bonne aptitude de ce ruban au marquage par laser sur un câble guipé après cuisson du ruban in situ.

### Exemple 3

On a réalisé un ruban bicouche en associant un ruban de PTFE naturel expansé cuit d'une densité de 0,5 et d'une épaisseur de 30 µm à un ruban de PTFE cru pigmenté noir d'une densité de 1,65 et d'une épaisseur de 50 µm.

Le ruban obtenu présente une très bonne aptitude au marquage laser.

Bien que l'invention ait été décrite en liaison avec des modes de réalisation particuliers, il est bien évident qu'elle n'y est nullement limitée et qu'on peut lui apporter différentes variantes et modifications sans pour autant sortir ni de son cadre ni de son esprit.

## Revendications

1. Ruban (8) en polytétrafluoroéthylène (PTFE) formé d'au moins deux couches de PTFE de couleurs différentes, apte au marquage par laser, et dont la couche inférieure au moins est constituée de PTFE cru, caractérisé par le fait que la couche supérieure au moins présente une densité inférieure à 1,0.

2. Ruban selon la revendication 1, caractérisé par le fait qu'il comprend seulement deux couches de PTFE, à savoir une couche supérieure de densité inférieure à 1,0, d'une première couleur, par exemple blanche en PTFE naturel, cru ou cuit, éventuellement additionné de pigments blancs, et une couche inférieure d'une seconde couleur réalisée en PTFE cru chargé de pigments colorés.

3. Ruban selon la revendication 1, caractérisé par le fait qu'il comporte trois couches de PTFE cru, à savoir une couche supérieure de densité inférieure à 1,0, d'une première couleur, par exemple blanche en PTFE naturel, cru ou cuit, éventuellement additionné de pigments blancs, une couche intermédiaire de densité inférieure à 1,0, réalisée en PTFE cru ou cuit chargé de pigments d'une seconde couleur, et une couche inférieure réalisée en PTFE cru chargé de pigments d'une troisième couleur, différente de la seconde.

4. Ruban selon l'une quelconque des revendications précédentes, caractérisé par le fait que chacune des couches est réalisée par extrusion lubrifiée, calandrage, et le cas échéant dédensification par étirage et/ou cuisson.

5. Ruban selon l'une quelconque des revendications 1 à 3, caractérisé par le fait que chacune des couches est constituée de PTFE cru et qu'il est réalisé par coextrusion lubrifiée, calandrage, et le cas échéant dédensification par étirage.

## Claims

1. A tape (8) of polytetrafluoroethylene (PTFE) formed by at least two layers of PTFE of different colours, capable of being marked by laser, wherein at least the bottom layer of which is made of ram PTFE, characterized in that a least the top layer has a density of less than 1,0.

2. A tape according to claim 1, characterized in that it comprises only two layers of PTFE, that is to say, a top layer with a density of less than 1,0 in a first colour, for example white, in natural PTFE, raw or baked, possibly with the addition of white pigments, and a bottom layer in a second colour made of raw PTFE charged with coloured pigments.

3. A tape according to claim 1, characterized in that it comprises three layers of PTFE, that is to say, a top layer with a density of less than 1,0 in a first colour, for example white, in natural PTFE, raw or baked, possibly with the addition of white pigments, an intermediate layer with a density of less that 1,0 made of raw or baked PTFE charged with pigments of a second colour, and a bottom layer made of raw PTFE charged with pigments of a third colour that is different from the second.

4. A tape according to any one of the preceding claims, characterized in that each of the layers is obtained by lubricated extrusion, calendering and, if required, with a reduction in density by drawing and/or baking.

5. A tape according to any one of claims 1 to 3, characterized in that each of the layers is constituted by raw PTFE and that it is obtained by lubricated coextrusion, calendering and, if required, a reduction in density by drawing.

## Patentansprüche

1. ßand (8) aus Polytetrafluoroethylen (PTFE), welches aus mindestens zwet PTFE-Schichten unterschiedlicher Farbe gebildet ist und mit Hilfe eines Lasers markiert werden kann coobei mindestens die uniere Schicht aus rohem PTFE gebildet ist, dadurch gekennzeichnet mindestens die obere Schicht eine Dichte von weniger als 1,0 aufweist.

2. ßand nach Anspruch 1, dadurch gekennzeichnet, daß es lediglich zwet PTFE-Schichten aufweist, d.h. eine obere Schicht mit einer Dichte von weniger als 1,0 mit einer ersten Farbe, beispielsweise einer weißen Farbe von unbehandelterm oder erhitztem natürlichem PTFE, das gegebenenfalls mit weißen Pigmenten versetzt worden ist, und einer unteren Schicht mit einer zweiten Farbe aus unbehandeltem PTFE, das gefärbte Pigmente enthält.

3. ßand nach Anspruch 1, dadurch gekennzeichnet, daß es drei PTFE-Schichten umfaßt, d.h. eine obere Schicht mit einer Dichte von weniger als 1,0 und einer ersten Farbe, beispielsweise einer weißen Farbe von unbehandelterm oder erhitztem natürlichem PTFE, das gegebenenfalls mit weißen Pigmenten versetzt worden ist, einer Zwischenschicht mit einer Dichte von weniger als 1,0 aus unbehandeltem oder erhitztem PTFE, das Pigmente einer zweitten Farbe enthält, und einer unteren Schicht aus unbehandeltem PTFE, das Pigmente einer dritten Farbe, die von der zweiten verschieden ist, enthält.

4. ßand nach einem der vorhergehenden Ansprüche, dadurch gekennzeichnet, daß jede der Schichten durch Extrusion in Gegenwart von gleitmitteln, Kalandrieren und gegebenenfalls Verringern der Dichte durch Strecken und/oder Eihitzen gebildet worden ist.

5. ßand nach einem der Ansprüche 1 bis 3, dadurch gekennzeichnet, daß jede der Schichten aus unbehandeltem PTFE besteht, welches durch Coextrusion in Gegenwart von gleitmitteln, Kalandrieren und gegebenenfalls Verringern der Dichte durch Strecken gebildet worden ist.
